# EUROPEAN PATENT SPECIFICATION

(11) **EP 1 440 845 B1**
(45) Date of publication and mention of the grant of the patent: **24.08.2005**
(21) Application number: 04075065.5
(22) Date of filing: 09.01.2004
(51) Int. Cl.: B60R 9/04

(54) **Bracket for securing transverse bars to longitudinal bars fixed to the roof of vehicles and the like**
Klammer zum Anbringen von Querträgerstangen an Längsträgerstangen, die am Dach eines Fahrzeugs oder dergleichen befestigt sind
Support pour attacher des barres transversales aux barres longitudinales fixées au toit d'un véhicule ou similaire

(30) Priority: 21.01.2003 IT MI20030019 U
(43) Date of publication of application: 28.07.2004
(73) Proprietor: CAM Costruzione Auto Accessori Milano S.R.L., 20123 Milano (IT)
(72) Inventor: Superti, Carlo, Milano (IT)
(74) Representative: Raimondi, Margherita

(56) References cited:
- US-A- 5 275 320
- US-A- 5 492 258
- PATENT ABSTRACTS OF JAPAN vol. 014, no. 196 (M-0964), 20 April 1990 (1990-04-20) -& JP 02 038158 A (KOKUSAN KINZOKU KOGYO CO LTD), 7 February 1990 (1990-02-07)
- PATENT ABSTRACTS OF JAPAN vol. 1999, no. 11, 30 September 1999 (1999-09-30) -& JP 11 157394 A (OSAKA BANBAA SEISAKUSHO:KK), 15 June 1999 (1999-06-15)
- PATENT ABSTRACTS OF JAPAN vol. 1998, no. 12, 31 October 1998 (1998-10-31) -& JP 10 181455 A (SEIKO KOGYO KK), 7 July 1998 (1998-07-07)

## Description

The present invention relates to an engaging bracket for transverse bars to be fastened to longitudinal bars fixed to the roof of cars and the like according to the preamble of claim 1. Such a bracket is known from US 5,275,320.

It is known in the technical sector relating to the fixing of car accessories such as ski racks, luggage racks and the like that there exists the need to lock them to the fixed parts integral with the roof of the car. A particular example of this consists in the need to secure bars which are transverse with respect to the direction of travel - or "multipurpose racks" as they are known, since they are designed to be completed with special complementary accessories for carrying skis, bicycles and the like - to the longitudinal bars which are integral with the roof of the car in a position substantially lateral with respect thereto.

It is also known that special engaging jaws have been designed for this purpose, said jaws being integral with each end of the said transverse bars so as to allow engagement and locking thereof to the longitudinal bars.

Owing to their particular form, which essentially consists of a seat closed on four sides, said known devices cannot be used universally, i.e. adapted so that they can be fixed to any type of longitudinal bar. This results in the need to provide auxiliary adapting elements and/or to envisage, during production, different types of jaws so as to ensure the availability of the jaw suited for the particular longitudinal bar.

This therefore results in the need for different moulds, an increase in the parts to be kept in stock and despatched to destinations for retail distribution and, ultimately, an increase in the cost per individual part.

The technical problem which is posed, therefore, is that of providing an end bracket for transverse bars to be secured to longitudinal bars fixed to the roof of a car and able to applied to any type of longitudinal bar, independently of its form and size so as to reduce the number of production moulds, the parts to be kept in stock and despatched and consequently the overall cost per individual part.

Within the context of this problem a further requirement is that the bracket should be simple and inexpensive to manufacture, easy to engage with the transverse bars of the current type, easy to be fitted and fixed also by non-specialised persons and able to blend into the overall arrangement so as to produce an aerodynamic and pleasing final appearance.

These results are achieved according to the present invention by an engaging bracket for transverse bars to be fastened to longitudinal bars fixed to the roof of cars and the like, comprising means for clamping the bracket on said longitudinal bar, said clamping means comprising a C-shaped element having an externally open side and being displaceable in a direction substantially perpendicular to that of the roof of the car and at least one dihedron fixed to the bracket and able to co-operate with said C-shaped element so as to produce stable locking of the bracket on the fixed longitudinal bar, there being provided means for adjusting and operating the movable C-shaped element.

Further details may be obtained from the following description of a non-limiting example of embodiment of the present invention, provided with reference to the accompanying drawings, in which:
- Figure 1 shows an exploded schematic perspective view of the engaging bracket according to the present invention; and
- Figure 2 shows a schematic cross-sectional view along a vertical plane of the bracket assembled and engaged with the longitudinal bar.

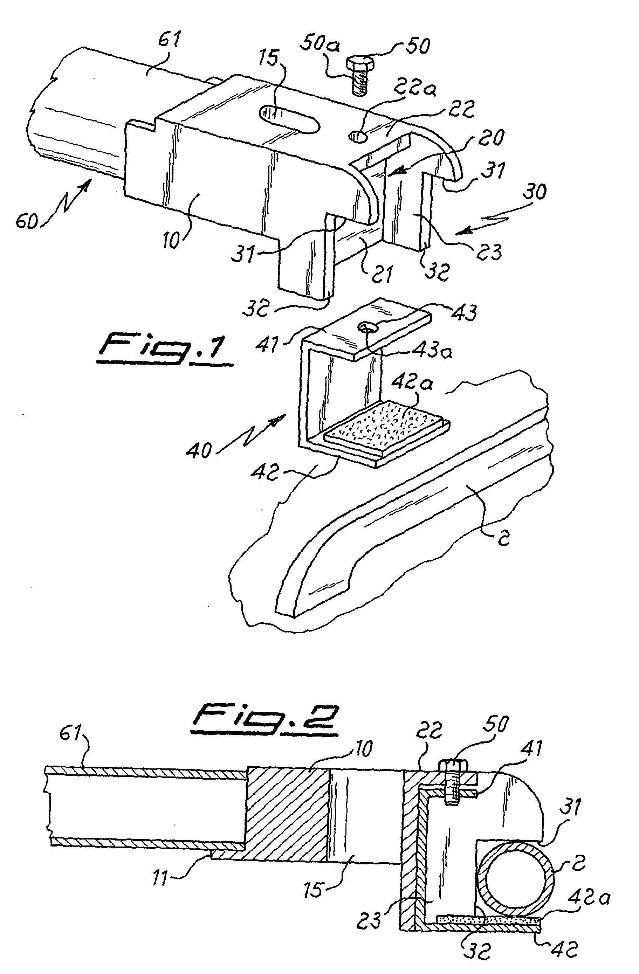

As illustrated, the engaging bracket according to the invention comprises a shaped body 10 for forming a seat 20 having a substantially vertical front end surface 21 which is delimited at the top by a substantially horizontal, fixed, surface 22 and by two side surfaces 23 facing each other and perpendicular to the end surface and to the upper surface.

A through-hole 22a is formed in the fixed upper surface 22.

The bracket 10 also has two dihedrons 30 which are substantially in the form of an overturned "L" so as to define a first upper surface 31 which is substantially horizontal and a second surface 32 which is perpendicular to the first surface and substantially vertical.

The said seat 20 is able to house a C-shaped clamping element 40 having an upper horizontal surface 41 with a transverse dimension smaller than the transverse dimension of the bottom horizontal surface 42; the upper surface 41 of the C-shaped element has a hole 43 with a female thread 43a able to be engaged with the thread 50a of an operating bolt 50.

A pad 42a made of material with a high coefficient of friction is applied on the inner side of the bottom surface 42 of the C-shaped element.

Once the bracket is assembled, the clamping element 40 is situated inside the seat 20 so that the two holes, i.e. 22a in the surface 22 and 43 in the surface 41, are coaxial with each other, allowing the insertion of the bolt 50 into the through-hole 21 and screwing thereof onto the female thread 43a of the hole 43, thus fastening the clamping element 40 to the bracket 10.

On the other side the bracket is already engaged with a tube 61 which forms part of the transverse bar 60 which, although not illustrated, is normally of the telescopic type; said engagement is performed by means of force-fitting of the bar 61 into a special U-shaped seat 11 of the bracket 10.

In order to engage the bracket with the longitudinal bar 2 of the car 3, the following sequence of operations is performed:
- the clamping element 40 is left loose so as to allow mounting in the transverse direction of the C-shaped element onto the fixed bar 2,
- until it comes up against the vertical surfaces 32 of the dihedrons 30;
- the bolt 50 is initially screwed so as cause the displacement of the C-shaped element in the vertical direction and upwards so that the horizontal bottom surface 42 comes into engagement with the longitudinal tube 2, and
- causes a relative movement of the bracket which brings the upper horizontal surface 31 of the dihedron 30 into contact against the said bar 2;
- from this moment, further tightening of the bolt 50 will cause stable locking of the bracket on the longitudinal bar 2.

It is therefore obvious how the engaging bracket according to the present invention is substantially universal in that the locking element in the form of a C which is open externally and able to be displaced in the vertical direction allows adaptation of the size of the fixing jaws to any type of bar without the need to change parts.

In addition to this, the user is able to perform the operations without any substantial effort since the telescopic transverse bar 60 may be tensioned once the two respective opposite brackets have been clamped.

The security of engagement is further increased by the presence of any load which, pushing in a vertical direction on the transverse bar, causes deformation thereof which results in the creation of a thrust component in the transverse direction and outwards, therefore helping keep the C-shaped element pressed against the fixed bar.

It is envisaged, moreover, that the bracket is provided with a seat 15 for housing security means such as locks and the like which are known per se and not illustrated nor described in detail.

## Claims

1. Engaging bracket for transverse bars (61) to be fastened to longitudinal bars (2) fixed to the roof of cars and the like, comprising means (30,40) for clamping the bracket on said longitudinal bar (2), **characterized in that** said clamping means comprise a C-shaped element (40) having an externally open side and being displaceable in a direction substantially perpendicular to that of the car roof and at least one dihedron (30) fixed to the bracket and able to co-operate with said C-shaped element so as to produce stable locking of the bracket on the fixed longitudinal bar (2), there being provided means (50) for adjusting and operating the movable C-shaped element (40).

2. Bracket according to Claim 1, **characterized in that** it has an inset seat (20) for housing the movable C-shaped element (40).

3. Bracket according to Claim 2, **characterized in that** said seat comprises a substantially vertical front end surface (21) which is delimited at the top by a substantially horizontal, fixed, surface (22) and by two side surfaces (23) facing each other and perpendicular to the end surface (21) and to the upper surface (22).

4. Bracket according to Claim 4, **characterized in that** said upper fixed surface (22) has a through-hole (22a).

5. Bracket according to Claim 1, **characterized in that** said dihedrons (30) have a shape substantially in the form of an overturned "L" so as to define a first upper surface (31) which is substantially horizontal and a second surface (32) which is perpendicular to the first surface and substantially vertical.

6. Bracket according to Claim 1, **characterized in that** said C-shaped clamping element (40) is in the form of a "C" with an upper horizontal surface (41) having a transverse dimension smaller than the transverse dimension of the bottom horizontal surface (42).

7. Bracket according to Claim 6, **characterized in that** the upper surface (41) of the C-shaped element has a hole (43) with a female thread (43a) able to be engaged with said operating means (50).

8. Bracket according to Claim 6, **characterized in that** a pad (42a) made of material with a high coefficient of friction is applied onto the inner side of the bottom surface (42) of the C-shaped element.

9. Bracket according to Claim 1, **characterized in that** said operating means (50) consist of a bolt (50) with a thread (50a) corresponding to the female thread (43a) of the said hole (43).

10. Bracket according to Claim 1, **characterized in that** it envisages a U-shaped seat (11) arranged on the opposite side to that of the clamping means and able to house in a force-fitted manner a tube (61) of the transverse bar (60).

## Patentansprüche

1. Eingriffsklammer zur Befestigung von Querträgern (61), an auf Autodächern und dergleichen fest angebrachten Längsträgern (2), umfassend Mittel (30,40) zum Festklemmen der Klammer an dem Längsträger (2), **dadurch gekennzeichnet, dass** die Festklemmmittel ein C-förmiges Element (40) umfassen, weiches eine nach aussen hin offene Seite aufweist und in einer senkrecht zur Richtung des Autodaches verlaufenden Richtung verschiebbar ist, sowie zumindest ein an der Klammer fest angeordnetes Dieder (30), welches mit dem C-förmigen Element zusammenwirken kann, um eine stabile Verblockung der Klammer an dem fest angebrachten Längsträger (2) zu schaffen, wobei Mittel (50) zum Einstellen und Betätigen des beweglichen C-förmigen Elements (40) vorgesehen sind.

2. Klammer nach Anspruch 1, **dadurch gekennzeichnet, dass** sie eine eingerückte Passung (20) zur Aufnahme des beweglichen C-förmigen Elements (40) aufweist.

3. Klammer nach Anspruch 2, **dadurch gekennzeichnet, dass** die Passung eine im wesentlichen vertikale vordere Endfläche (21) umfasst, die oben durch eine im wesentlichen horizontale, feststehende Fläche (22), sowie durch zwei Seitenflächen (23) begrenzt wird, welche einander gegenüberliegend und senkrecht zu der Endfläche (21) und der oberen Fläche (22) angeordnet sind.

4. Klammer nach Anspruch 3, **dadurch gekennzeichnet, dass** die obere feststehende Fläche (22) ein durchgehendes Loch (22a) aufweist.

5. Klammer nach Anspruch 1, **dadurch gekennzeichnet, dass** die Dieder (30) im wesentlichen die Form eines umgedrehten "L" aufweisen, so dass sie eine erste, obere Fläche (31), die im wesentlichen horizontal verläuft, und eine zweite Fläche (32), die senkrecht zu der ersten Fläche und im wesentlichen vertikal verläuft, bilden.

6. Klammer nach Anspruch 1, **dadurch gekennzeichnet, dass** das C-förmige Klemmelement (40) in der Form eines "C" ausgebildet ist, wobei eine obere, horizontale Fläche (41) eine kleinere Querabmessung aufweist als die Querabmessung der unteren, horizontalen Fläche (42).

7. Klammer nach Anspruch 6, **dadurch gekennzeichnet, dass** die obere Fläche (41) des C-förmigen Elements ein Loch (43) mit einem Innengewinde (43a)aufweist, welches mit dem Betätigungsmittel (50) in Eingriff gebracht werden kann.

8. Klammer nach Anspruch 6, **dadurch gekennzeichnet, dass** ein Belag (42a) aus einem Material mit einem hohen Reibungskoeffizienten auf die Innenseite der unteren Fläche (42) des C-förmigen Elements aufgebracht ist.

9. Klammer nach Anspruch 1, **dadurch gekennzeichnet, dass** das Betätigungsmittel (50) aus einer Bolzenschraube (50) mit einem Gewinde (50a) besteht, welches dem Innengewinde (43a) des Loches (43) entspricht.

10. Klammer nach Anspruch 1, **dadurch gekennzeichnet, dass** eine U-förmige Passung (11) vorgesehen ist, welche an der der Seite des Klemmmittels gegenüberliegenden Seite angeordnet ist und in der Lage ist, in klemmsitzartiger Weise ein Rohr (61) des Querträgers (60) aufzunehmen.

## Revendications

1. Dispositif à emboîtement permettant de fixer des supports transversaux (61) à des supports longitudinaux (2) montés de manière fixe sur des toits de voiture ou autres éléments semblables, ledit dispositif comprenant des moyens (30,40) permettant de le bloquer contre le support longitudinal (2), **caractérisé en ce que** les moyens de blocage comprennent un élément (40) en forme de C qui présente un côté ouvert vers l'extérieur et qui est déplaçable dans une direction perpendiculaire à celle du toit de voiture ainsi qu'au moins un dièdre (30) solidaire du dispositif et qui est en mesure de coopérer avec l'élément en forme de C afin d'assurer un blocage stable du dispositif contre le support longitudinal (2) monté de manière fixe, des moyens (50) étant prévus pour ajuster et actionner l'élément mobile (40) en forme de C.

2. Dispositif selon la revendication 1, **caractérisé en ce qu'**il présente un siège en retrait (20) destiné à recevoir l'élément mobile (40) en forme de C.

3. Dispositif selon la revendication 2, **caractérisé en ce que** le siège comprend une face terminale avant (21) essentiellement verticale, laquelle est délimitée, en haut, par une face fixe (22) essentiellement horizontale ainsi que par deux faces latérales (23), lesquelles sont disposées en face l'une de l'autre et perpendiculairement à la face terminale (21) et à la face supérieure (22).

4. Dispositif selon la revendication 3, **caractérisé en ce que** la face supérieure fixe (22) présente un trou traversant (22a).

5. Dispositif selon la revendication 1, **caractérisé en ce que** les dièdres (30) présentent essentiellement la forme d'un "L" renversé, de sorte qu'ils forment une première face (31), supérieure, s'étendant essentiellement de manière horizontale et une deuxième face (32) s'étendant perpendiculairement à la première face et orientée essentiellement de manière verticale.

6. Dispositif selon la revendication 1, **caractérisé en ce que** l'élément de serrage (40) en forme de C est réalisé sous la forme d'un "C", une face horizontale supérieure (41) présentant, en sens transversal, une dimension inférieure à celle de la face horizontale inférieure (42).

7. Dispositif selon la revendication 6, **caractérisé en ce que** la face supérieure (41) de l'élément en forme de C présente un trou (43) pourvu d'un filetage intérieur (43a), lequel peut être mis en prise avec le moyen d'actionnement (50).

8. Dispositif selon la revendication 6, **caractérisé en ce qu'**un revêtement (42a) réalisé en un matériau présentant un coefficient de frottement élevé est appliqué sur le côté intérieur de la face inférieure (42) de l'élément en forme de C.

9. Dispositif selon la revendication 1, **caractérisé en ce que** le moyen d'actionnement (50) est constitué par un boulon (50) pourvu d'un filetage (50a) correspondant au filetage intérieur (43a) du trou (43).

10. Dispositif selon la revendication 1, **caractérisé en ce qu'**il est prévu un siège (11) en forme de U qui est disposé sur le côté opposé au côté où est situé le moyen de blocage et qui est en mesure de recevoir, sous forme d'ajustement par blocage, un tube (61) du support transversal (60).
